(19) Europäisches Patentamt
European Patent Office
Office européen des brevets

(11) EP 0 899 552 A1

## (12) EUROPÄISCHE PATENTANMELDUNG

(43) Veröffentlichungstag:
03.03.1999 Patentblatt 1999/09

(51) Int. Cl.⁶: $G01L\ 5/04$

(21) Anmeldenummer: 98113537.9

(22) Anmeldetag: 17.07.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 30.08.1997 DE 19737985

(71) Anmelder:
DEUTZ Aktiengesellschaft
51063 Köln (DE)

(72) Erfinder: Eckert, Günther
51789 Lindlar (DE)

(54) **Verfahren und Vorrichtung zur Messung und Einstellung der Spannung eines Riemens**

(57) Die Spannung von kraftübertragenden Riemen wird durch Abwechseln des Eigenfrequenzmessens und Nachspannens auf den gewünschten Wert gebracht. Dieses Verfahren ist umständlich und zeitraubend.

Durch automatische, kontinuierliche Schwingungsanregung und Eigenfrequenzmessung eines Riementeils 4 kann gleichzeitig von Hand oder automatisch die Riemenspannung auf den gewünschten Wert eingestellt werden.

Für kraftübertragende Riemen, wie Zahnriemen, bei Brennkraftmaschine.

Fig. 1

EP 0 899 552 A1

**Beschreibung**

Die Erfindung betrifft ein Verfahren und Vorrichtungen zur Messung und Einstellung der Spannung eines kraftübertragenden Riemens, vorzugsweise an einer Brennkraftmaschine, nach dem Oberbegriff der unabhängigen Ansprüche 1, 2 und 4.

Bei kraftübertragenden Riemen ist die richtige Riemenspannung eine für Funktion und Lebensdauer des Riemens wichtige Größe.

Eine Methode zur Messung der Riemenspannung besteht darin, einen Riemenabschnitt bestimmter Länge durch eine Kraft bestimmter Größe zu belasten und aus dessen Verformung die Riemenspannung abzuleiten. Diese Methode ist relativ ungenau, da die Verformung des Riemens nicht nur von dessen Vorspannung, sondern auch von der riemenspezifischen Biegesteifheit abhängt.

Eine genaue Messung der Riemenspannung bietet die Methode der Eigenfrequenzmessung eines Riementeils. Die Riemenspannung läßt sich dabei nach den physikalischen Gesetz $T = 4ml^2f^2$ berechnen, wobei T die Riemenspannung in Newton, m die Masse pro Längeneinheit des Riemens in Kilogramm pro Meter, l die schwingende Länge des Riementeils in Meter und f die Eigenfrequenz in Hertz ist. Zur Eigenfrequenzmessung umgreifen die Schenke eines U-förmigen Meßkopfes eines Schwingungsmeßgeräts die kraftübertragenden Seiten eines Riementeils. Dieser Riementeil wird für ein Meßvorgang von Hand zu Schwingungen angeregt und auf einem Anzeigenteil des Meßgerätes kann direkt ein eine Aussage zur Riemenspannung des Riemens machender Wert abgelesen werden.

Diese Methode liefert exakte Ergebnisse, ist jedoch für den praktischen Gebrauch umständlich. Nach dem Meßvorgang muß das Meßgerät abgesetzt werden und entsprechend dem Meßwert die Riemenspannung gefühlsmäßig verändert werden. Dann erfolgt ein neuer Meßvorgang und ggf. ein weiterer Einstellvorgang.

Der Erfindung liegt die Aufgabe zugrunde, ein Verfahren und Vorrichtungen zur genauen und raschen Einstellung der Riemenspannung anzugeben.

Die Aufgabe wird gemäß dem Verfahren dadurch gelöst, daß die Schwingungsanregung des Riementeils und die Messung von dessen Eigenfrequenz automatisch und kontinuierlich erfolgen und daß gleichzeitig die Riemenspannung von Hand oder automatisch auf den gewünschten Wert einstellbar ist. Die automatische und kontinuierliche Messung der Riemenspannung gestattet ein gleichzeitiges und dadurch rasches und punktgenaues Einstellen der gewünschten Riemenspannung. Das Einstellen kann, je nach Automatisierungsgrad der Fertigung, von Hand oder automatisch erfolgen.

Die entsprechende erfindungsgemäße Vorrichtung besteht darin, daß zur Schwingungsanregung des Riementeils eine motorisch, beispielsweise elektromotorisch oder pneumatisch oder hydraulisch angetriebene Anschlagvorrichtung mit einem Anschlagmittel vorgesehen ist. Diese Vorrichtung kann manuell oder automatisch in Arbeitsstellung - also auf den Riemen - gebracht werden und es erfolgt dann eine kontinuierliche sich wiederholende Schwingungsanregung des Riemens und Messung der Riemenspannung. Somit kann sich der Monteur ausschließlich auf die Einstellung der Riemenspannung konzentrieren und kann diese direkt anhand aktueller Meßwerte nachregeln und einstellen. Er ist also nicht mehr auf eine gefühlsmäßige Beurteilung angewiesen. Damit ist dieser Einstellvorgang auch von weniger geübten Monteuren problemlos zu bewerkstelligen.

Eine vorteilhafte Weiterbildung der Erfindung besteht darin, daß die Anschlagvorrichtung einen Getriebemotor mit einem Motorgehäuse und einem daraus hervorragenden Wellenstück aufweist und daß das Anschlagmittel ein an dem Wellenstück befestigter, vorzugsweise radial stehender Federdraht ist. Auf diese Weise ist die Anschlagvorrichtung durch handelsübliche Bauteile verwirklicht. Da der Meßkopf vorzugsweise automatisch in Meßstellung geht und die Schwingungen des mechanisch angeregten Riemens automatisch mißt, kann sich das Bedienungspersonal ausschließlich der Einstellung der Riemenspannung widmen. Durch die kontinuierliche Anzeige derselben ist ihre punktgenaue Einstellung möglich.

Eine alternative erfindungsgemäße Vorrichtung besteht darin, daß zur Schwingungsanregung des Riementeils eine elektromagnetisch betätigte Anschlagvorrichtung mit einem Anschlagmittel vorgesehen ist. Diese Anschlagvorrichtung weist eine Spule auf, in die das Anschlagmittel in Form eines vorzugsweise stiftförmigen Ankers eintaucht. Wird an die Spule eine elektrische Spannung angelegt, wird der Anker mit hoher Beschleunigung aus der Spule herausbewegt und stößt an den Riemen an. Bei Abschalten der elektrischen Spannung gelangt der Anker infolge der Schwerkraft oder durch Einwirkung einer schwachen Feder in die Spule zurück. Um eine möglichst verschleißfreie Ausbildung zu erreichen, sind in die Spule vorteilhaft Führungen für den Anker eingearbeitet. Der an den Riemen anschlagende Kopf des Ankers ist vorzugsweise halbkugelförmig ausgebildet, um einerseits jegliche Beschädigung des Riemens zu vermeiden und andererseits bei einer Weiterbewegung des Riemens, die zur weitgehenden Ausschaltung von Meßtoleranzen erfolgt, ein Abgleiten des Ankers an der Riemenrückseite zu ermöglichen. Handelt es sich bei dem Riemen um einen beidseitig mit Zahnprofil versehenen Riemen, ist der Radius der Halbkugel so groß gewählt, daß der Anker nicht in den Bereich zwischen zwei Zähnen des Riemens eintauchen kann. Selbstverständlich sind auch andere Ausgestaltungen des Ankers möglich. So ist es im Rahmen der Erfindung auch vorgesehen, den Kopf des Ankers zylinderabschnittsförmig auszubilden. In diesem Falle muß der Anker allerdings in der Spule geführt sein, damit er sich nicht verdreht. Im übrigen sind für diese Ausführungsform sämtliche konstruktive Ausbildungen in Bezug auf die Kombination mit den weiteren erforderlichen Bauteilen wie bei der motorisch angetriebenen Anschlagvorrichtung möglich.

Da die Anschlagvorrichtung und der Meßkopf eine Meßeinheit bilden, ist eine gemeinsame und synchrone Handhabung von Anschlagvorrichtung und Meßkopf gegeben. Dies wird durch eine pneumatische Verstellvorrichtung erreicht.

Dadurch, daß die Meßeinheit auf einer definierten Fläche der Brennkraftmaschine absetzbar ist, wird eine exakte Zuordnung der Meßeinheit zur Brennkraftmaschine verwirklicht.

Es hat Vorteile, daß Abstandssensoren zur Steuerung und Überwachung der Lage der Meßeinheit vorgesehen sind. Dadurch ist eine feinfühlige Annäherung und Fixierung der Meßeinheit an die Brennkraftmaschine ermöglicht.

Durch eine vorteilhafte Ausbildung der Erfindung, bei der ein Näherungsschalter mit Zeitglied vorgesehen ist, der den Getriebemotor beim Erreichen der Arbeitsstellung der Meßeinheit einschaltet und nach ca. 30 Sekunden ausschaltet, wird ein selbsttätiges Abschalten der Meßeinheit nach einer Zeitdauer bewirkt, die erfahrungsgemäß zum Einstellen der Riemenspannung ausreicht.

Wenn das Wellenstück eine Drehzahl von ca. 3 U/sek aufweist, ist die für eine kontinuierliche Schwingungsmessung erforderliche Impulsfolge zur Schwingungsanregung des Riementeils gegeben.

Dadurch, daß der Federdraht bei stehendem Getriebemotor eine vom zu spannenden Riementeil wegweisende Ruhestellung einnimmt, werden beim Aufsetzen der Meßeinheit auf den Riemen weder Federdraht noch Riemen beschädigt.

Vorteilhaft ist, daß die Meßeinheit eine speicherprogrammierte Steuerung aufweist. Dadurch ist der gesamte Bewegungs- und Funktionsablauf der Meßeinheit abgestimmt und optimiert gespeichert.

Weitere Merkmale der Erfindung ergeben sich aus der folgenden Beschreibung und der Zeichnung, in der Ausführungsbeispiele der Erfindung schematisch dargestellt sind.

Es zeigen:

Fig. 1:  eine Meßeinheit und ein Zahnriementeil in perspektivischer Darstellung und

Fig. 2:  eine Ansicht einer auf einer Transportvorrichtung liegenden Brennkraftmaschine mit einer Meßeinheit in Arbeitsstellung.

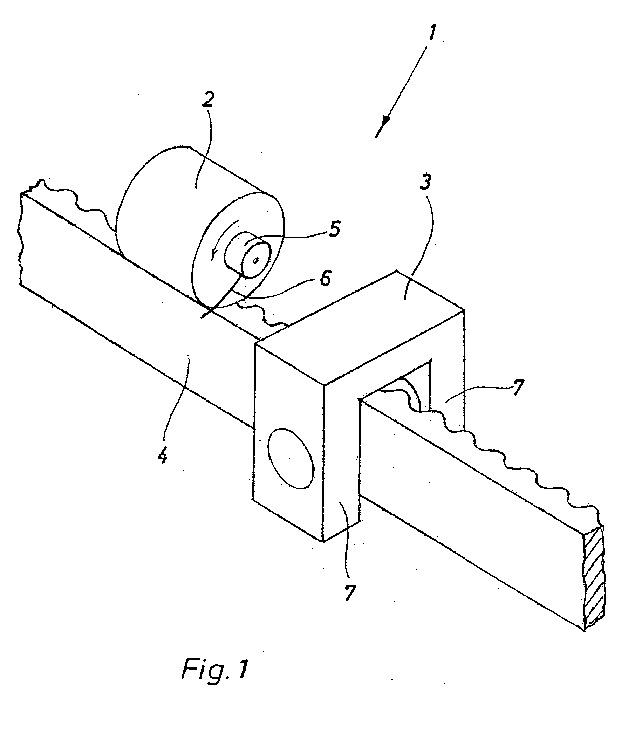

Fig. 1 zeigt eine Meßeinheit 1 mit einem Getriebemotor 2 und einem U-förmigen Meßkopf 3 in Arbeitsstellung an einem Zahnriementeil 4.

Der Getriebemotor 2 weist ein Wellenstück 5 mit einem radial stehenden Federdraht 6 auf, der das Zahnriementeil 4 tangiert und mit jeder Berührung zu Schwingungen anregt. Dies geschieht 3 x pro Sekunde, wodurch eine praktisch konstante Schwingungsamplitude erreicht wird.

Der Meßkopf 3 umgreift mit seinen Schenkeln 7 das Zahnriementeil 4, um dessen Eigenfrequenz messen zu können, die nach entsprechender Eichung des Meßkopfes 3 ein Maß für die Riemenspannung ist.

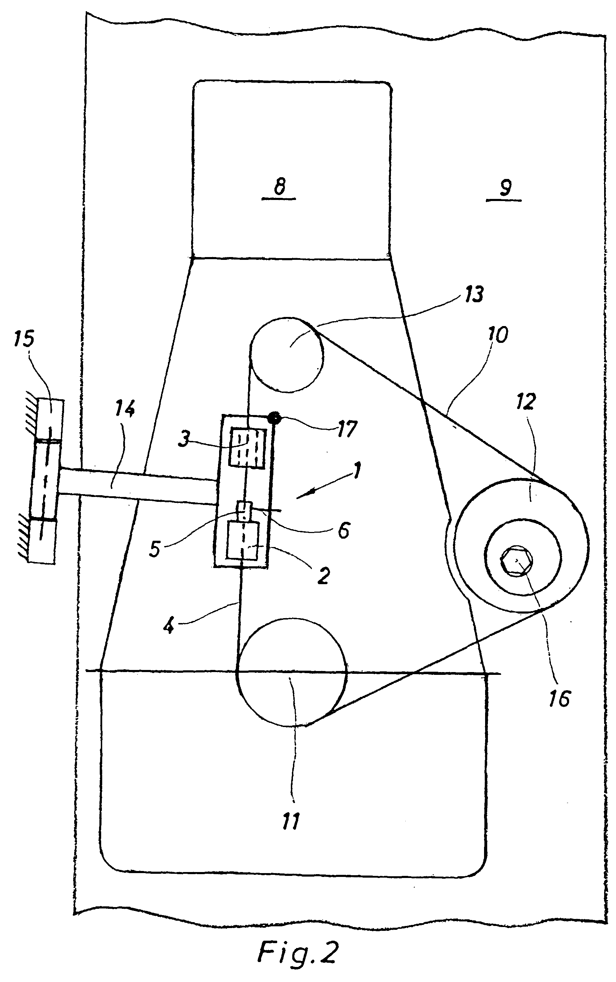

In Fig. 2 ist die Brennkraftmaschine 8 auf einer Transportvorrichtung 9, die das Montageband in der Serienherstellung ist, liegend dargestellt. Der Zahnriemen 10 verbindet in diesem Beispiel die antreibende Kurbelwelle 11 mit einer Spannvorrichtung, die beispielsweise mit einer Lichtmaschine 12 kombiniert sein kann und ein Treibrad 13. Das Treibrad 13 kann beispielsweise direkt oder indirekt eine Nockenwelle antreiben. Da in diesem Fall eine genaue Drehwinkelzuordnung von Kurbelwelle und Nockenwelle erforderlich ist, kommt hier ein Zahnriemen zum Einsatz. Selbstverständlich ist die Erfindung an jedem anderen Riemen, auch an anderen Geräten oder Maschinen, einsetzbar. Die Meßeinheit 1 ist durch einen Arm 14 mit einem ortsfesten Lager 15 verbunden, um das sie beispielsweise pneumatisch schwenkbar ist, bis sie auf einer definierten Fläche 17 der Brennkraftmaschine 8 anliegt. Die Meßeinheit 1 befindet sich in Arbeitsstellung, so daß die Eigenfrequenz des Riementeils 4 als Maß für die Riemenspannung gemessen wird. Zugleich wird an einem Exzenter 16 der Lichtmaschine 12 die Spannung des Zahnriemens 10 auf den gewünschten Wert - einer bestimmten Eigenfrequenz des Riementeils 4 - eingestellt.

Nach 30 Sekunden schwenkt die Meßvorrichtung zurück in ihre Ruhestellung. Sollte die gewünschte Riemenspannung noch nicht eingestellt sein, kann der Meß- und Einstellvorgang beliebig oft wiederholt werden.

**Patentansprüche**

1.  Verfahren zur Messung und Einstellung der Riemenspannung eines kraftübertragenden Riemens, vorzugsweise an einer Brennkraftmaschine, wobei die Riemenspannung über eine Messung der Eigenfrequenz eines zum Schwingen angeregten Riementeils bestimmt wird, dadurch gekennzeichnet, daß die Schwingungsanregung des Riementeils (4) und die Messung von dessen Eigenfrequenz automatisch und kontinuierlich erfolgen und daß gleichzeitig die Riemenspannung von Hand oder automatisch auf den gewünschten Wert einstellbar ist.

2.  Vorrichtung zur Einstellung der Riemenspannung eines kraftübertragenden Riemens, vorzugsweise an einer Brennkraftmaschine, mit einem U-förmigen Meßkopf, dessen Schenkel die kraftübertragenden Seiten eines zu Schwingungen anregbaren Riementeils umgreifen, um dessen Eigenfrequenz als Maß für die Riemenspannung zu messen, <u>dadurch gekennzeichnet,</u> daß zur Schwingungsanregung des Riementeils (4) eine motorisch angetriebene Anschlagvorrichtung mit einem Anschlagmittel vorgesehen ist.

3. Vorrichtung nach Anspruch 2,
<u>dadurch gekennzeichnet,</u> daß die Anschlagvorrichtung einen Getriebemotor (2) mit einem Motorgehäuse und einem daraus hervorragenden Wellenstück (5) aufweist, und daß das Anschlagmittel ein an dem Wellenstück (5) befestigter, vorzugsweise radial stehender Federdraht (6) ist.

4. Vorrichtung zur Einstellung der Riemenspannung eines kraftübertragenden Riemens, vorzugsweise an einer Brennkraftmaschine, mit einem U-förmigen Meßkopf, dessen Schenkel die kraftübertragenden Seiten eines zu Schwingungen anregbaren Riementeils umgreifen, um dessen Eigenfrequenz als Maß für die Riemenspannung zu messen, <u>dadurch gekennzeichnet,</u> daß zur Schwingungsanregung des Riementeils (4) eine elektromagnetisch betätigte Anschlagvorrichtung mit einem Anschlagmittel vorgesehen ist.

5. Vorrichtung nach Anspruch 4,
<u>dadurch gekennzeichnet,</u> daß die Anschlagvorrichtung und der Meßkopf (3) eine Meßeinheit (1) bilden.

6. Vorrichtung nach einem der vorangegangenen Ansprüche,
<u>dadurch gekennzeichnet,</u> daß die Meßeinheit (1) durch eine pneumatisch betätigte Verstellvorrichtung in Arbeitsstellung bringbar ist.

7. Vorrichtung nach einem der vorangegangenen Ansprüche,
<u>dadurch gekennzeichnet,</u> daß die Meßeinheit (1) auf einer definierten Fläche (17) der Brennkraftmaschine (8) absetzbar ist.

8. Vorrichtung nach einem der vorangegangenen Ansprüche,
<u>dadurch gekennzeichnet,</u> daß Abstandssensoren zur Steuerung und Überwachung der Lage der Meßeinheit (1) vorgesehen sind.

9. Vorrichtung nach einem der vorangegangenen Ansprüche,
<u>dadurch gekennzeichnet,</u> daß ein Näherungsschalter mit Zeitglied vorgesehen ist, der den Getriebemotor (2) beim Erreichen der Arbeitsstellung der Meßeinheit (1) einschaltet und nach ca. 30 Sekunden ausschaltet.

10. Vorrichtung nach einem der vorangegangenen Ansprüche,
<u>dadurch gekennzeichnet,</u> daß das Wellenstück (5) eine Drehzahl von ca. 3 U/sek aufweist.

11. Vorrichtung nach einem der vorangegangenen Ansprüche,
<u>dadurch gekennzeichnet,</u> daß der Federdraht (6) bei stehendem Getriebemotor (2) eine vom zu spannenden Riementeil (4) wegweisende Ruhestellung einnimmt.

12. Vorrichtung nach einem der vorangegangenen Ansprüche,
<u>dadurch gekennzeichnet,</u> daß die Meßeinheit (1) eine speicherprogrammierte Steuerung aufweist.

Fig. 1

Fig.2

Europäisches
Patentamt

**EUROPÄISCHER RECHERCHENBERICHT**

Nummer der Anmeldung

EP 98 11 3537

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| X | US 4 928 538 A (BURDESS JAMES S ET AL) 29. Mai 1990 | 1,2,4,12 | G01L5/04 |
| A | * Zusammenfassung; Abbildungen 1-4,6 * <br> * Spalte 3, Zeile 18 - Spalte 3, Zeile 40 * <br> * Spalte 5, Zeile 3 - Spalte 6, Zeile 68 * <br> --- | 3,5-11 | |
| X | EP 0 520 845 A (RENAULT AUTOMATION) 30. Dezember 1992 | 1 | |
| A | * Zusammenfassung; Abbildungen 1-3 * <br> * Spalte 3, Zeile 23 - Spalte 4, Zeile 51 * <br> ----- | 2-12 | |

RECHERCHIERTE
SACHGEBIETE (Int.Cl.6)

G01L

Der vorliegende Recherchenbericht wurde für alle Patentansprüche erstellt

| Recherchenort | Abschlußdatum der Recherche | Prüfer |
|---|---|---|
| MÜNCHEN | 21. Oktober 1998 | Helm, B |

**ANHANG ZUM EUROPÄISCHEN RECHERCHENBERICHT**
**ÜBER DIE EUROPÄISCHE PATENTANMELDUNG NR.**   EP 98 11 3537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-1998

| Im Recherchenbericht angeführtes Patentdokument | | Datum der Veröffentlichung | Mitglied(er) der Patentfamilie | | Datum der Veröffentlichung |
|---|---|---|---|---|---|
| US 4928538 | A | 29-05-1990 | CA | 1319534 A | 29-06-1993 |
| | | | AU | 597958 B | 14-06-1990 |
| | | | AU | 7126587 A | 09-10-1987 |
| | | | DE | 3772983 A | 17-10-1991 |
| | | | EP | 0296162 A | 28-12-1988 |
| | | | WO | 8705699 A | 24-09-1987 |
| | | | JP | 7011459 B | 08-02-1995 |
| | | | JP | 1500142 T | 19-01-1989 |
| EP 0520845 | A | 30-12-1992 | FR | 2678376 A | 31-12-1992 |
| | | | DE | 69208160 D | 21-03-1996 |
| | | | DE | 69208160 T | 14-08-1996 |
| | | | ES | 2083117 T | 01-04-1996 |

EPO FORM P0461

Für nähere Einzelheiten zu diesem Anhang : siehe Amtsblatt des Europäischen Patentamts, Nr.12/82